# EUROPEAN PATENT APPLICATION

(11) **EP 2 189 888 A1**
(43) Date of publication of application: **26.05.2010**
(21) Application number: 09157232.1
(22) Date of filing: 02.04.2009
(51) Int. Cl.: G06F 3/048

(54) **A method and apparatus to dynamically arrange a virtual key position in a hierarchical structure**

(30) Priority: 05.11.2008 TW 97142697
(71) Applicant: AVerMedia Information, Inc., Chung-Ho City, Taipei Hsien (TW)
(72) Inventor: Kuo, Mei-Jen, Taipei Hsien (TW); Yen, Christopher, Taipei Hsien (TW); Chen, Ming-Song, Taipei Hsien (TW)
(74) Representative: Lang, Christian

(57) **Abstract**

The present invention discloses a method to dynamically arrange positions of a plurality of virtual keys in a hierarchical structure with many layers. These virtual keys can control an application program and include at least one function group key and at least one command key. The method includes the following steps. The first step is to determine whether a first virtual key is a function group key or a command key, wherein the first virtual is located in a first layer in the hierarchical structure. When the first virtual key is a command key, the first virtual key is moved from the first layer to another layer and a number to select the first virtual key is added by one. Next, whether or not the application program processing has ended is determined. When the application program processing has ended, the number of times the first virtual key is clicked is compared to the number of times other virtual keys were selected. A virtual key that is clicked the most is moved to the top layer in the hierarchical structure.

## Description

### Related Applications

The present application is based on, and claims priority from, Taiwan Application Serial Number 97142697, filed November 05, 2008, the disclosure of which is hereby incorporated by reference herein in its entirety.

### Field of the Invention

The present invention relates to an arrangement method and apparatus, and especially to a method and apparatus to dynamically arrange a virtual key position in a hierarchical structure.

### Background of the Invention

With progress in technology, lighter and smaller products have become basic requirements for portable electronic devices. However, a physical keyboard occupies a large area in a portable device. It is unfavorable to design a portable device to use a physical keyboard in the portable device. Therefore, a virtual keyboard is developed to solve the foregoing problems. A display of the portable device can show the virtual keyboard to provide an user to control any software.

A complicated virtual keyboard structure is required to operate software with many functions. The first kind of a virtual keyboard structure shows all function keys in the display to enable a user to select and operate. The second kind of virtual keyboard structure classifies the function keys into classes. Then, the function keys classified in the same class are arranged in a virtual keyboard structure in a hierarchical structure. When a user wants to use a special function, he needs to select a class, and then, to select a key under the class to operate the function.

Although the first kind of a virtual keyboard structure provides all function keys in the display for a user to directly select the function, such a structure cannot have unlimited increases in the number of function keys because the display area is limited. In other words, the first kind of virtual keyboard structure only provides control software with limited functions. Therefore, the present portable device uses the second kind of a virtual keyboard structure. However, such structures still have many drawbacks. For example, a hierarchical structure can have many layers. A frequently used function key is arranged in the lowest layer in the hierarchical structure to cause inconvenient use.

Therefore, an apparatus and a method that can resolve the foregoing problems are needed.

### Summary of the Invention

Therefore, the present invention provides a method and apparatus to dynamically arrange a virtual key position in a hierarchical structure.

In accordance with the foregoing purpose, the present invention discloses a method to dynamically arrange positions of a plurality of virtual keys in a hierarchical structure with many layers. These virtual keys can control an application program and include at least one function group key and at least one command key. The method includes the following steps. The first step is to determine whether a first virtual key is a function group key or a command key, wherein the first virtual key is located in a first layer in the hierarchical structure. When the first virtual key is a command key, the first virtual key is moved from the first layer to another layer in the hierarchical structure. A number to select the first virtual key is added by one. Next, a determination step is performed to determine whether or not the application program processing is ended. When the application program processing is ended, the number to select the first virtual key is compared with the other numbers to select other virtual keys. Then, a virtual key that has the biggest selected number is moved from a layer the virtual key located to another layer in the hierarchical structure.

Moreover, the present invention discloses an apparatus to dynamically arrange positions of a plurality of virtual keys in a hierarchical structure with many layers. These virtual keys can control an application program and include at least one function group key and at least one command key. The apparatus includes a first determination module to determine if a first virtual key is a function group key or a command key, a calculation module to move the first virtual key from the first layer to another layer in the hierarchical structure when the first virtual key is a command key and a number to select the first virtual key is added by one, a second determination module to determine whether or not the application program processing is ended, and an arrangement module to compare the number to select the first virtual key with the other numbers to select other virtual keys when the application program processing is ended and to move a virtual key from a layer the virtual key located to another layer in the hierarchical structure.

Accordingly, the apparatus and method can dynamically arrange virtual key positions in a hierarchical structure based on the usage frequency of a virtual key. A virtual key that is most frequently used is arranged on the top layer in a hierarchical structure. Therefore, a user can directly select this virtual key in the display. Such a method and apparatus can save time when this user wants to use this virtual key again because it is not necessary for the user to search the virtual key in the hierarchical structure.

### Brief Description of the Drawings

The foregoing aspects and many of the attendant advantages of this invention will become more readily appreciated as the same becomes better understood by reference to the following detailed description, when taken in conjunction with the accompanying drawings, wherein:
Figure 1 is a hierarchical structure of virtual keys.
Figure 2 is a flow chart to dynamically arrange positions of a plurality of virtual keys in a hierarchical structure.
Figure 3 is a schematic diagram of a command key shown in the display of the present invention.
Figure 4 is an apparatus to dynamically arrange positions of a plurality of virtual keys in a hierarchical structure.

### Detailed Description of the Preferred Embodiment

The present invention provides a method and an apparatus to dynamically arrange positions of a plurality of virtual keys in a hierarchical structure. Although the virtual keys are also arranged in a hierarchical structure, each virtual key is not always located in a layer. A virtual key that is used the most frequently is dynamically moved from the virtual key originally located layer to the top layer in a hierarchical structure. Therefore, a user can directly click this virtual key in the display. When this user wants to use this virtual key again, it is not necessary for the user to search for the virtual key in the hierarchical structure.

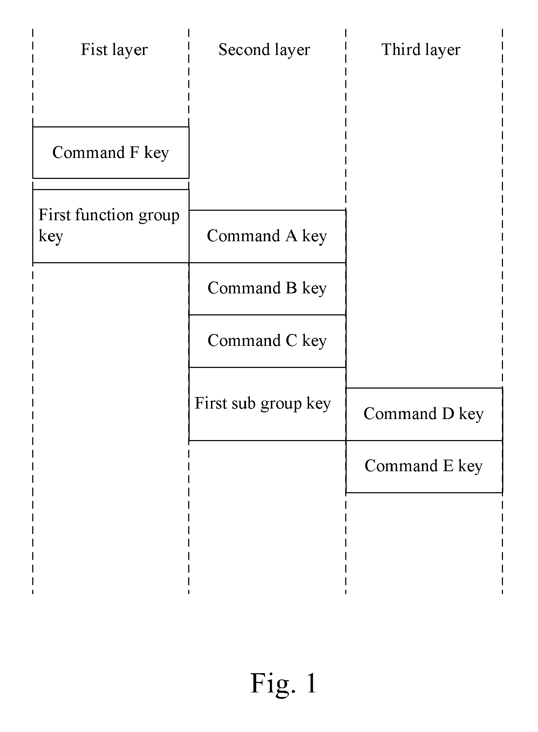

Figure 1 shows a hierarchical structure of virtual keys according to an embodiment of the present invention. Each virtual key corresponds to a function of an application program. For example, virtual key A controls a command A function and virtual key B controls a command B function. In the following paragraphs, a command A key represents the virtual key A, a command B key represents the virtual key B and a command C key represents the virtual key C. In figure 1, the top layer, the first layer, of the hierarchical structure includes a command F key and a first function group key. The second layer of the hierarchical structure includes a command A key, a command B key, a command C key and a first subgroup key. The bottom layer, the third layer, of the hierarchical structure includes a command D key and a command E key. The command A key, the command B key, the command C key and the first subgroup key belong to the first function group key. That is when a user clicks the first function group key, the command A key, the command B key, the command C key and the first subgroup key are displayed in the display. Then, the user can click a key to active its function. The command D key and the command E key belong to the first subgroup key.

According to the hierarchical structure, typically, when the application program is started, the keys arranged in the top layer are shown in the display first. Therefore, when a user wants to click the command E key, the user needs to click the first function group key to enter the second layer of the hierarchical structure. Then, the user clicks the first subgroup key to enter the third layer of the hierarchical structure. Finally, the user can click the command E key to use the corresponding function. Such wastes time in switching the layers to search for the command E. And, if a wrong virtual key is clicked when searching for the command E key, a new searching process needs to be performed again.

In this present invention, if the command E key is used very frequently, the command E key is dynamically moved from the third layer to the top layer in a hierarchical structure. A user can directly select this command E key in the top layer. Therefore, it is not necessary for the user to perform the selecting process from the first function group key, the first subgroup key to the command E key.

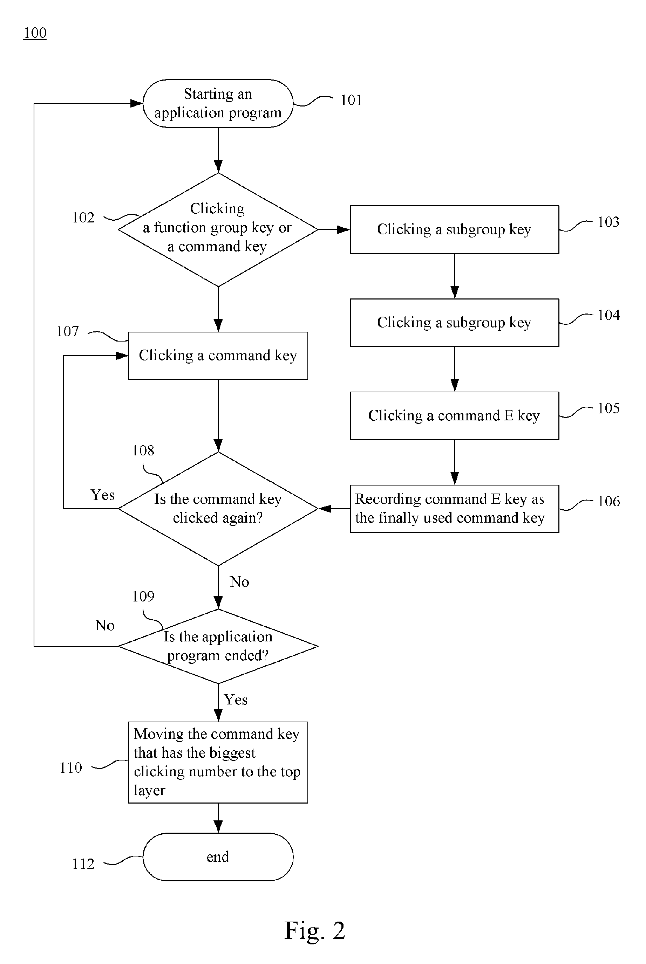

Figure 2 is a flow chart to dynamically arrange positions of a plurality of virtual keys in a hierarchical structure. Referring to figure 1 and figure 2, the flow 100 includes a step 101 to start an application program.

Next, in step 102, a determination step is performed to determine a virtual key clicked by a user is a function group key or a command key. In this embodiment, that is to determine if a virtual key clicked by the user is the first function group key or the command F key.

When the user clicks the first function group key, the keys arranged in the second layer of the hierarchical structure are displayed in the display in step 103. In this embodiment, the command A key, the command B key, the command C key and the first subgroup key are displayed in the display. Then, the user can click a key to activate its function. If the user wants to select the function corresponding to the command E key, the user needs to click the subgroup key to enter the third layer of the hierarchical structure in step 104. In this embodiment, the command D key and the command E key are shown in the display in this step.

Next, in step 105, the user clicks a command key he wants. In this embodiment, the user wants to click command E key to use the corresponding function. Finally, in step 106, the command E key is recorded as the final command key the user clicked. Moreover, the number of times the user clicks the command E key is incremented by one. Then, the command E key is moved from the third layer to the top layer of the hierarchical structure. In another embodiment, the command E key can replace a command key that was moved to the top layer before. For example, if the command F key is moved to the top layer before, the command E key will replace the command F key. Therefore, the user can directly select this command E key in the top layer. It is not necessary for the user to perform the selection process from the first function group key, the first subgroup key to the command E key.

On the other hand, the number of times the user clicks the command E key is recorded in a memory to compare with the numbers that the user clicks the command A key, the command B key, the command C key and the command D key. In an embodiment, a counter is used to record the number of clicks. When the flow 100 finishes, the command key that has the highest number is moved to the top layer in step 110. In other words, when the application program is started again, the top layer of the hierarchical structure includes the first function group key and this command key that has the biggest clicking number.

In step 108, a determination step is performed to determine whether or not a same command key is clicked by the user. In this embodiment, that is to determine whether or not the command E key is clicked again. If the user clicks the command E key again, the user can directly select this command E key in the top layer. It is not necessary for the user to perform the selecting process from the first function group key, the first subgroup key to the command E key.

On the other hand, if the user does not click the command E key again, step 109 is performed to determine whether or not the application program has ended. If the application program has ended, step 110 is performed. In step 110, the number of clicks is recorded in step 106 and the number of times the command keys are clicked is then compared. The command key that has the biggest clicking number is moved to the top layer in step 110. In an embodiment, recorded in step 106, the command F key was clicked 10 times. The command E key was clicked 12 times. The command A key was clicked 9 times. Then, the command E key is moved from the third layer to the top layer. In another embodiment, the command E key replaces the command F key. Therefore, when the application program is started again, the top layer of the hierarchical structure includes the first function group key and this command E key. Finally, the flow 100 ends in step 112.

On the other hand, if the application program does not end in step 109, step 101 is performed again. And, step 102 is performed to determine whether the virtual key clicked by a user is a function group key or a command key. In this embodiment, because the command E key is moved to the top layer, in step 102 it is determined if a virtual key clicked by the user is the first function group key or the command E key. If the user clicks the command E key, a corresponding function is performed in step 107. Next, step 108 is performed to determine whether or not the command E key is clicked again. If the user clicks the command E key again, the corresponding function of the command E key is performed in step 107. On the other hand, if the user does not click the command E key again, step 109 is performed to determine whether or not the application program has ended. If the application program has ended, step 110 is performed. In step 110, the clicking numbers recorded in step 106 of command keys are compared to each other. The command key that has the biggest clicking number is moved to the top layer in step 110. Finally, the flow 100 is ended in step 112.

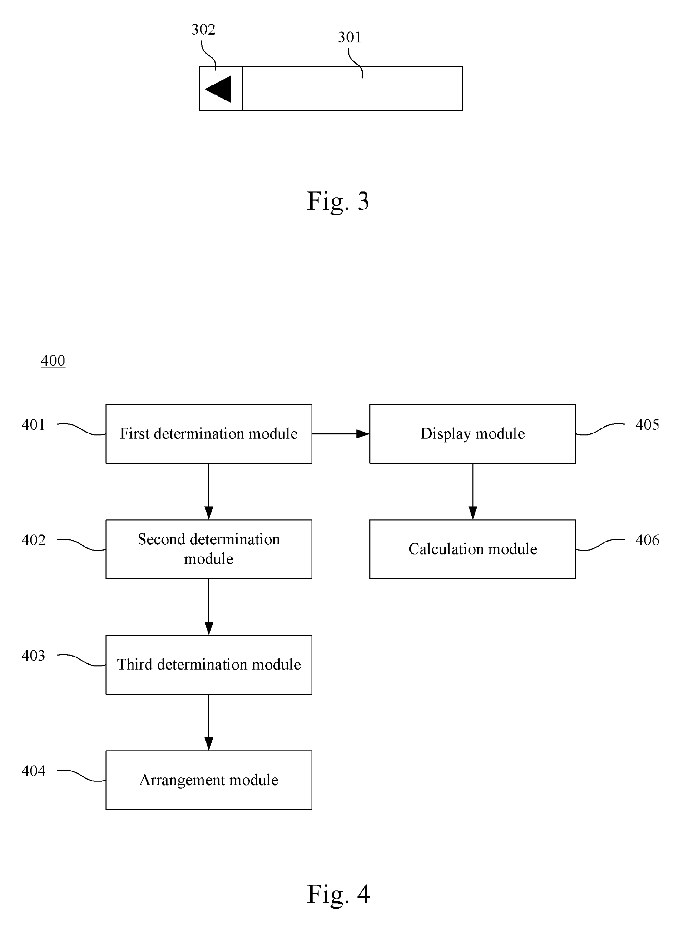

Figure 3 is a schematic diagram of a command key shown in the display of the present invention. The name of a command key is shown in the frame 301. An expanded Menu is connected to frame 302. In an embodiment, when a user clicks the frame 302, function keys corresponding to the command key and located in the next layer are shown in the display.

Figure 4 is an apparatus to dynamically arrange positions of a plurality of virtual keys in a hierarchical structure. The apparatus 400 includes a first determination module 401, a second determination module 402, a third determination module 403, an arrangement module 404, a display module 405 and a calculation module 406.

When an application program is started, the first determination module 401 determines whether a virtual key clicked by a user is a function group key or a command key. If the user clicks a function group key, the display module 405 displays keys of the function group in the display. If the user clicks a command key, the display module displays a corresponding function in the display. The calculation module 406 records the command key as the finally used command key and adds 1 to the number to click the command key. Then, the command key is moved to the top layer of the hierarchical structure. In another embodiment, the command key can replace a command key that was moved to the top layer before. Moreover, when the application program is ended, the arrangement module 404 moves the command key that has the biggest number recorded in calculation module 406 to the top layer of the hierarchical structure. In other words, when the application program is started again, the top layer of the hierarchical structure includes the first function group key and this command key that has the biggest clicking number.

The apparatus further comprises a second determination module 402 to determine whether or not a same command key is clicked by the user. In an embodiment, that is to determine whether or not the command E key is clicked again. If the user clicks the command E key again, the user can directly select this command E key in the top layer. It is not necessary for the user to perform the selecting process from the first function group key, the first subgroup key to the command E key.

The apparatus further comprises a third determination module 403 to determine whether or not the application program has ended. If the application program is ended, the arrangement module 404 moves the command key that has the biggest number recorded in calculation module 406 to the top layer of the hierarchical structure. On the other hand, if the application program has not ended, the first determination module 401 determines if a virtual key clicked by a user is a function group key or a command key.

Accordingly, the apparatus and method can dynamically arrange a virtual key position in a hierarchical structure based on a use frequency of a virtual key. A virtual key that has a highest use frequency is arranged on the top layer in a hierarchical structure. Therefore, a user can directly select this virtual key in the display.

While the preferred embodiment of the invention has been illustrated and described, it will be appreciated that various changes can be made therein without departing from the spirit and scope of the invention.

## Claims

1. A method to dynamically arrange positions of a plurality of virtual keys in a hierarchical structure, wherein the hierarchical structure includes a first layer and a second layer, these virtual keys can control an application program and include at least one function group key and at least one command key, the method includes the following steps:
(a) determining whether a first virtual key clicked by a user is the function group key or the command key, wherein the first virtual is located in the second layer of the hierarchical structure ;
(b)when the first virtual key is the command key, the first virtual key is moved from the second layer to another layer in the hierarchical structure;
(c)calculating a clicking number which is the number of times the first virtual key is clicked;
(d) determining whether the application program processing is ended or not; and
(e) comparing the clicking number of the first virtual key with the other clicking numbers to select other virtual keys, when the application program processing has ended, wherein a virtual key that has the biggest clicking number is moved to the first layer.

2. The method of claim 1, wherein step (a) further comprises displaying corresponding functions when the first virtual key is the function group key.

3. The method of claim 1, wherein step (b) further comprises to move the first virtual key from the second layer to a top layer, wherein when the application program is started, the top layer is shown first, wherein the top layer includes a second virtual key, when the first virtual key is moved to the top layer in step (b), the first virtual key replaces the second virtual key.

4. The method of claim 1, wherein step (c) further comprises to add one to the clicking number of clicking the first virtual key.

5. The method of claim 1, wherein step (c) further comprises to determine whether the first virtual key is clicked again or not.

6. The method of claim 1, wherein each of the virtual keys correspond a function of the application program, wherein step (a) further comprises to start a corresponding function when the first virtual key is command key.

7. The method of claim 1, wherein when the application program has not ended in step (d), step (a) to step (c) are performed again.

8. The method of claim 1, wherein the first layer is the top layer, and when the application program is started, the top layer is shown first.

9. An apparatus to dynamically arrange positions of a plurality of virtual keys in a hierarchical structure, wherein the hierarchical structure includes a first layer and a second layer, these virtual keys can control an application program and include at least one function group key and at least one command key, comprising:
a first determination module to determine whether a first virtual key clicked by a user is the function group key or the command key, wherein the first virtual key is located in the second layer of the hierarchical structure;
a calculation module to move the first virtual key from the second layer to another layer in the hierarchical structure and to calculate the number of times the first virtual key is clicked when the first virtual key is the command key; and
an arrangement module to compare the number of times the first virtual key is clicked with the number of times other virtual keys are clicked, when the application program processing has ended, wherein a virtual key that is clicked the most is moved to the first layer.

10. The apparatus of claim 9, further comprising a display module to display corresponding functions when the first virtual key is the function group key.

11. The apparatus of claim 9, wherein the calculation module moves the first virtual key from the second layer to a top layer, wherein when the application program is started, the top layer is shown first, wherein the top layer includes a second virtual key, when the calculation module moves the first virtual key to the top layer, the first virtual key replaces the second virtual key.

12. The apparatus of claim 9, wherein the calculation module calculates a clicking number by adding one to the clicking number of clicking the first virtual key.

13. The apparatus of claim 9, further comprising a second determination module to determine whether the first virtual key is clicked again or not.

14. The apparatus of claim 9, wherein each of the virtual keys corresponds to a function of the application program.

15. The apparatus of claim 9, wherein the first layer is the top layer, the arrangement module moves a virtual key that has the biggest clicking number to the first layer, wherein when the application program is started, the top layer is shown first.

## Amended claims

### Amended claims in accordance with Rule 137(2) EPC.

**1.** A method to dynamically arrange positions of a plurality of virtual keys in a hierarchical structure, wherein the hierarchical structure includes a first layer and a second layer, these virtual keys can control an application program and include at least one function group key and at least one command key, the method includes the following steps:
(a) determining whether a first virtual key clicked by a user is the function group key or the command key, wherein the first virtual key is located in the second layer of the hierarchical structure ;
(b) when the first virtual key is the command key, the first virtual key is moved from the second layer to the first layer in the hierarchical structure;
(c) calculating a clicking number which is the number of times the first virtual key is clicked;
(d) determining whether the application program processing is ended or not; and
(e) comparing the clicking number of the first virtual key with the other clicking numbers to select other virtual keys, when the application program processing has ended, wherein a virtual key that has the biggest clicking number is moved to the first layer, wherein the first layer is the top layer, and when the application program is started, the top layer is shown first.

**2.** The method of claim 1, wherein step (a) further comprises displaying corresponding functions when the first virtual key is the function group key.

**3.** The method of claim 1, wherein step (b) further comprises to move the first virtual key from the second layer to a top layer, wherein when the application program is started, the top layer is shown first, wherein the top layer includes a second virtual key, when the first virtual key is moved to the top layer in step (b), the first virtual key replaces the second virtual key.

**4.** The method of claim 1, wherein step (c) further comprises to add one to the clicking number of clicking the first virtual key.

**5.** The method of claim 1, wherein step (c) further comprises to determine whether the first virtual key is clicked again or not.

**6.** The method of claim 1, wherein each of the virtual keys corresponds a function of the application program, wherein step (a) further comprises to start a corresponding function when the first virtual key is command key.

**7.** The method of claim 1, wherein when the application program has not ended in step (d), step (a) to step (c) are performed again.

**8.** An apparatus to dynamically arrange positions of a plurality of virtual keys in a hierarchical structure, wherein the hierarchical structure includes a first layer and a second layer, these virtual keys can control an application program and include at least one function group key and at least one command key, comprising:
a first determination module to determine whether a first virtual key clicked by a user is the function group key or the command key, wherein the first virtual key is located in the second layer of the hierarchical structure;
a calculation module to move the first virtual key from the second layer to the first layer in the hierarchical structure and to calculate the number of times the first virtual key is clicked when the first virtual key is the command key; and
an arrangement module to compare the number of times the first virtual key is clicked with the number of times other virtual keys are clicked, when the application program processing has ended, wherein a virtual key that is clicked the most is moved to the first layer, wherein the first layer is the top layer, when the application program is started, the top layer is shown first.

**9.** The apparatus of claim 8, further comprising a display module to display corresponding functions when the first virtual key is the function group key.

**10.** The apparatus of claim 8, wherein the calculation module moves the first virtual key from the second layer to a top layer, wherein when the application program is started, the top layer is shown first, wherein the top layer includes a second virtual key, when the calculation module moves the first virtual key to the top layer, the first virtual key replaces the second virtual key.

**11.** The apparatus of claim 8, wherein the calculation module calculates a clicking number by adding one to the clicking number of clicking the first virtual key.

**12.** The apparatus of claim 8, further comprising a second determination module to determine whether the first virtual key is clicked again or not.

**13.** The apparatus of claim 8, wherein each of the virtual keys corresponds a function of the application program.
